# EUROPÄISCHE PATENTSCHRIFT

(11) **EP 3 439 867 B1**
(45) Veröffentlichungstag und Bekanntmachung des Hinweises auf die Patenterteilung: **03.06.2020**
(21) Anmeldenummer: 17716489.4
(22) Anmeldetag: 03.04.2017
(51) Int. Cl.: B32B 7/10, B32B 7/12, B32B 15/08, B32B 15/085, B32B 27/16, B32B 27/32, B32B 27/20

(54) **VERPACKUNGSLAMINAT MIT EINER TRÄGERSCHICHT UND EINER POLYOLEFINSCHICHT**
PACKAGING LAMINATE WITH A CARRIER COATING AND A POLYOLEFINE COATING
EMBALLAGE STRATIFIÉ AVEC UNE COUCHE DE SUPPORT ET D'UNE POLYOLÉFINE

(30) Priorität: 04.04.2016 AT 502712016
(43) Veröffentlichungstag der Anmeldung: 13.02.2019
(73) Patentinhaber: Constantia Teich GmbH, 3205 Weinburg (AT)
(72) Erfinder: KORNFELD, Martin, 3400 Klosterneuburg (AT); KITZBERGER, Robert, 3133 Traismauer (AT); RESCH, Helmut, 3203 Rabenstein (AT); TEUBENBACHER, Jasmin, 3205 Weinburg (AT); SCHEDL, Adolf, 3180 Lilienfeld (AT)
(74) Vertreter: Patentanwälte Pinter & Weiss OG
(86) Internationale Anmeldenummer: PCT/EP2017/057856
(87) Internationale Veröffentlichungsnummer: WO 2017/174510

(56) Entgegenhaltungen:
- EP-A1- 2 496 653
- JP-A- S6 480 523
- JP-A- 2013 227 666
- US-A1- 2006 003 120

## Beschreibung

Die gegenständliche Erfindung betrifft ein Verpackungslaminat mit einer Trägerschicht und einer damit verbundenen Polyolefinschicht, sowie ein Herstellverfahren für so ein Verpackungslaminat. Ebenso betrifft die Erfindung eine tiefgezogene Verpackungsschale aus einem solchen Verpackungslaminat.

In der Verpackungsindustrie werden häufig als Ausgangsmaterial für die Herstellung von Verpackungen folienartige Laminate verwendet. Dabei kommen je nach Anwendung verschiedenste Laminataufbauten in Frage. In vielen Verpackungslaminaten wird eine Aluminiumfolie als Trägerschicht verwendet, da Aluminium einen hervorragenden Produktschutz sicher stellt, einfach verarbeitet werden kann und in Verpackungslaminaten eine Barriere gegen äußere Einflüsse bildet. Die Trägerschicht aus Aluminium wird in der Regel mit anderen Schichten zum Verpackungslaminat kombiniert, wobei die anderen Schichten mit der Aluminiumschicht kaschiert werden können oder die anderen Schichten im Falle von Kunststoffen auf die Aluminiumschicht extrudiert werden können. Beim Kaschieren erfolgt die Verbindung mittels eines Klebers.

Für die Verwendung als Verpackungslaminat ist natürlich eine ausreichende Haftung zwischen der Trägerschicht aus Aluminium und einer damit verbundenen Kunststoffschicht erforderlich, um zu verhindern, dass sich das Verpackungslaminat bei Verwendung delaminiert oder manuell getrennt werden kann. In Verpackungslaminaten kommen dabei am häufigsten Polyolefine, wie z.B. Polypropylen (PP) oder Polyethylen (PE) in den verschiedenen Typen, zur Anwendung. Daher werden in Verpackungslaminaten zum einen spezielle Kleber verwendet und zum anderen kommen Oberflächenbehandlungen, wie z.B. eine Flammbehandlung, Coronabehandlung, Chromatierung der Oberfläche, usw., zur Anwendung, insbesondere bei erhöhter Anforderung an die Delaminationsbeständigkeit. Damit konnten Verpackungslaminate hergestellt werden, die den Anforderungen genügten. Ein solches Laminat und ein Herstellungsverfahren zeigt beispielsweise die US 2006/0003120 A1. Die JP 2013/227666 A zeigt ein solches Laminat mit einer im Kleber eingebundenen Titanverbindung. Die EP 2 496 653 A1 wiederum beschreibt das Lackieren einer Aluminiumfolie mit einem siliziumhaltigen Lack als Korrosionsschutz, der auch als Haftgrund für eine Heißsiegelschicht dient. Um die Hafteigenschaften von Aluminium zu verbessern beschreibt die JP S64 80523 A eine Flammabscheidung von Aluminium auf die Aluminiumoberfläche und das Kaschieren eines Polyolefinfilms auf die derart modifizierte Oberfläche.

Aufgrund von strengeren gesetzlichen Rahmenbedingungen für Verpackungslaminate, insbesondere für die Verpackung von Lebensmitteln, werden die Auswahl der möglichen Kleber und/oder die Möglichkeiten der Oberflächenbehandlung erheblich eingeschränkt.

Beispielsweise enthalten bisher verwendete Kleber, insbesondere auf Epoxidharzbasis, oftmals Bisphenol-A. Bisphenol-A ist aber eine Gruppe-3-Chemikalie der International Agency for Research on Cancer (IARC), d.h. nicht klassifizierbar hinsichtlich seiner Karzinogenität für den Menschen, und ist daher in Verpackungslaminaten unerwünscht. Ebenso gibt es strenge Vorschriften was den zulässigen Chromgehalt in Verpackungen angeht und was den Umgang mit Chromverbindungen angeht. Die Vorschriften werden noch weiter verschärft. Das macht die Verwendung bisheriger Kleber und Oberflächenbehandlungen schwierig bzw. unmöglich.

Andere mögliche Kleber erreichen aber nicht die benötigte Haftung zwischen der Trägerschicht aus Aluminium und der damit verbundenen Polyolefinschicht, insbesondere wenn eine hergestellte Verpackung in einem Sterilisationsprozess behandelt wird. Sterilisiert wird in einem Autoklaven bei typischen Temperaturen von 121°C und höher und für Zeitspannen im Bereich von 30min (30 - 45 Minuten). Durch den Sterilisationsprozess, aber auch durch das Füllgut in einer Verpackung selbst, wird der Kleber belastet, was die Haftung verringert und die Delaminationsbeständigkeit reduziert. Die verfügbaren Kleber bieten daher insbesondere nicht die erforderliche Sterilisationsbeständigkeit. Die bisherigen Oberflächenbehandlungen zur Verbesserung der Haftung sind mit solchen Klebern entweder nicht ausreichend, z.B. eine Flammbehandlung oder Coronabehandlung, oder nicht oder nur mehr eingeschränkt möglich, wie z.B. die Chromatierung der Oberfläche.

Es ist daher eine Aufgabe der gegenständlichen Erfindung ein Verpackungslaminat mit einer Trägerschicht aus Aluminium und einer damit verbundenen Polyolefinschicht, und ein zugehöriges Herstellverfahren, anzugeben, das eine ausreichende Haftung zwischen diesen Schichten aufweist.

Diese Aufgabe wird erfindungsgemäß dadurch gelöst, dass die Trägerschicht aus Aluminium über eine Kleberschicht oder Haftvermittlerschicht mit der Polyolefinschicht verbunden ist, wobei die der Kleberschicht oder der Haftvermittlerschicht zugewandten Oberfläche der Trägerschicht eine durch Silikatisierung oder Titanisierung hergestellte modifizierte Oberflächenschicht aufweist. Das erfindungsgemäße Herstellverfahren zeichnet sich dadurch aus, dass eine Aluminiumfolie als Trägerschicht auf einer Oberfläche titanisiert oder silikatisiert wird, auf die silikatisierte oder titanisierte Oberfläche ein Kleber aufgebracht wird und auf die Kleberschicht eine Polyolefinfolie aufkaschiert wird. Alternativ wird ein Haftvermittler und eine Polyolefinfolie auf die Trägerschicht koextrudiert. Durch die Silikatisierung oder Titanisierung kann ausreichend Verbundhaftung zwischen der Trägerschicht und der Polyolefinschicht aufgebaut werden, um den Verbund als Verpackungslaminat nutzen zu können. Die modifizierte Oberflächenschicht erhöht vor allem die Verankerung der Kleberschicht am Aluminium der Trägerschicht, da festgestellt wurde, dass sich das Verpackungslaminat vorrangig zum Aluminium delaminiert. Ganz wesentlich kann damit auch eine ausreichende Verbundhaftung nach einem Sterilisationsprozess erzielt werden, insbesondere auch mit Füllgut oder Simulanz. Simulanz ist eine Mischung oder eine Lösung die ein Füllgut in Ihren chemischen Eigenschaften nachstellt. Dies sind zum Beispiel Mischungen aus Ölen, Essig, Gewürzen, Zitronensäure usw. Darüber hinaus kann durch die Siikatisierung oder Titanisierung auch die Korrosionsbeständigkeit des Verpackungslaminats erhöht werden.

Das Verpackungslaminat eignet sich damit ganz besonders für die Herstellung von Verpackungsschalen durch einen Tiefziehprozess. Die Verpackungsschalen können dann mit einem Füllgut befüllt, verschlossen und sterilisiert werden.

Wenn die Polyolefinschicht mehrschichtig aufgebaut ist, können die Eigenschaften der Polyolefinschicht bzw. des Verpackungslaminats flexibel eingestellt werden.

Aus optischen Gründen ist es oftmals bevorzugt, wenn auf der der Polyolefinschicht abgewandten Oberfläche der Trägerschicht eine Lackschicht oder Schutzschicht aus Kunststoff vorgesehen ist. Dabei ist es ebenso vorteilhaft, wenn die der Lackschicht oder Schutzschicht zugewandte Oberfläche der Trägerschicht eine durch Silikatisierung oder Titanisierung hergestellte modifizierte Oberflächenschicht aufweist, um auch hier die Haftung zwischen Trägerschicht und Lackschicht oder Schutzschicht zu verbessern.

Um die Haftung auch zur Polyolefinschicht zu verbessern ist es vorteilhaft, wenn die der Trägerschicht zugewandte Oberfläche der Polyolefinschicht corona- oder flammvorbehandelt ist.

Bei Verwendung eines Polyurethan Klebers, eines acrylatbasierten Klebers oder eines polyesterbasierten Klebers ist können die Anforderungen hinsichtlich der, insbesondere hinsichtlich der lebensmittelrechtlichen, Unbedenklichkeit des Klebers erfüllt werden.

Um die Haftung weiter zu verbessern, oder einen verbesserten Korrosionsschutz des Verpackungslaminats zu erzielen, kann die Trägerschicht eine Primerschicht umfassen, wobei zwischen Trägerschicht und Primerschicht eine weitere durch Silikatisierung oder Titanisierung hergestellte modifizierte Oberflächenschicht vorgesehen ist.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 ein erfindungsgemäßes kaschiertes Verpackungslaminat,
Fig.2 einen beispielhaften Herstellprozess eines solchen Verpackungslaminats,
Fig.3 ein erfindungsgemäßes koexdrudiertes Verpackungslaminat,
Fig.4 einen beispielhaften Herstellprozess eines solchen Verpackungslaminats und
Fig.5 eine Trägerschicht mit zusätzlicher Primerschicht.

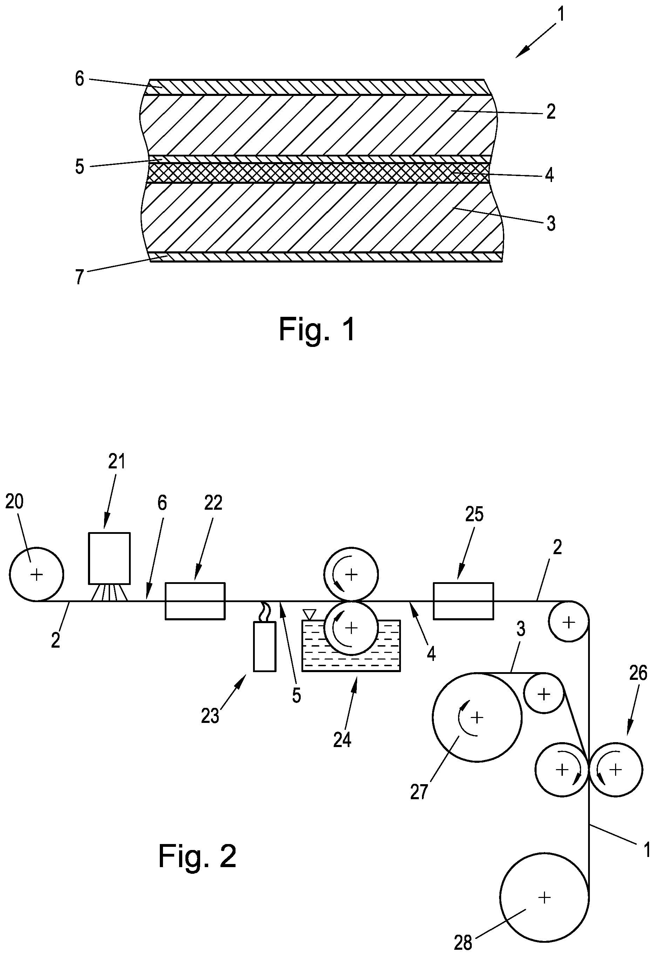

In Fig.1 ist ein erfindungsgemäßes kaschiertes Verpackungslaminat 1 mit einer Trägerschicht 2 aus Aluminium (Schichtdicke typisch 60 - 160µm) und einer damit verbundenen Polyolefinschicht 3 (Schichtdicke typisch 25 - 30µm), insbesondere eine Schicht aus ungerecktem Polypropylen (CPP). Die Kaschierung erfolgt mittels einer Kleberschicht 4, typischerweise mit einer Schichtdicke von 4 - 8µm oder einem Flächengewicht von 4 - 8 g/m².

Als Kleber für die Klebeschicht 4 kommt erfindungsgemäß ein Polyurethan Klebersystem, ein acrylatbasierter Kleber oder ein polyesterbasierter Kleber, typischerweise als 2-Komponentenkleber, zur Anwendung, auch Mischungen solcher Kleber sind denkbar. Der Kleber könnte bei Bedarf vor dem Auftragen auch eingefärbt werden. Die erzielbare Haftung zwischen einer Aluminiumschicht und einer Polyolefinschicht mit einem oben genannten Kleber wäre aber nicht ausreichend für die Anforderungen in einem Verpackungslaminat 1, insbesondere in einem sterilisationsbeständigen Verbund. Daher wird die der Polyolefinschicht 3 zugewandte Oberfläche der Aluminium Trägerschicht 2 vor dem Kaschieren silikatisiert oder titanisiert.

Die Silikatisierung oder Titanisierung ist bekanntermaßen eine Oberflächenbehandlung in Form einer Flammbehandlung, bei der dem Brenngas-Luftgemisch für die Erzeugung der Flamme eine Siliziumverbindung, wie ein Silan, oder eine Titanverbindung, als Titan enthaltende chemische Verbindung, zugemischt wird. Die Siliziumverbindung oder Titanverbindung erzeugt dabei eine dünne (wenige Nanometer), in der Regel für das freie Auge unsichtbare modifizierte Oberflächenschicht 5, wie z.B. eine SiOx oder TiOx Schicht, auf der Trägerschicht 2, die die Oberflächenspannung und damit auch die Hafteigenschaften der Aluminiumoberfläche erhöht. Die Silikatisierung oder Titanisierung ist z.B. aus der US 2005/0019580 A1 bekannt.

Durch die Silikatisierung oder Titanisierung werden die Hafteigenschaften der Aluminiumoberfläche der Trägerschicht 2 so weit verbessert, dass mit den oben genannten Klebern eine ausreichende Haftung zwischen der Trägerschicht 2 aus Aluminium und der Polyolefinschicht 3 erreicht wird, insbesondere wird die Verankerung des Klebers auf der Trägerschicht 2 verbessert. Dabei wird die Verbundhaftung um bis zu 3 N/15mm im Falle der Silikatisierung und um bis zu 4 N/15mm im Falle der Titanisierung erhöht, wie Schälversuche gezeigt haben. Damit können die geforderten Verbundhaftungen, auch nach einer Sterilisation, von mindestens 6N/15mm, bzw. von mindestens 5N/15mm nach Belastung durch ein Füllgut oder Simulanz, erzielt werden, die dazugehörigen maximalen Anreißwerte liegen bei ca. 7,5N/15mm (bei Silikatisierung) - 9N/15mm (bei Titanisierung).

Bei einem Schälversuch wird ein Teststreifen des Verpackungslaminats 1 an freien Enden der Trägerschicht 2 und der Polyolefinschicht 3 auseinandergezogen. Die freien Enden werden dabei in einer Zugmaschine eingespannt und auseinandergezogen und dabei die Kraft gemessen. Bei einer Breite des Teststreifens von 15mm erhält man die Angabe der Verbundhaftung mit xN/15mm. Die Angabe der Verbundhaftung ist hierbei der nahezu konstante Schälwert (Peelwert) und nicht der maximale Anreißwert, der am Beginn des Schälversuches als Kraftspitze auftritt. In der Regel werden zur Ermittlung der Verbundhaftung auch einen Anzahl von Schälversuchen durchgeführt und die gesuchte Verbundhaftung als Mittelwert aus den einzelnen Messungen ermittelt.

Weder die Silikatisierung, noch die Titanisierung erzeugt dabei Stoffe oder Stoffkonzentrationen, die in einem Verpackungslaminat 1, insbesondere in einer Anwendung für die Verpackung von Lebensmitteln, bedenklich oder durch gesetzliche Vorschriften verboten wären. Ebenso sind die genannten Kleber in Verpackungslaminaten 1 unbedenklich und insbesondere sind Bisphenol-A freie Kleber verfügbar.

Die Polyolefinschicht 3 kann zusätzlich auf der der Kleberschicht 4 zugewandten Oberfläche in bekannter Weise corona- oder flammvorbehandelt oder auch silikatisiert oder titanisiert werden, was die Verbundhaftung im Verpackungslaminat 1 auch kunststoffseitig erhöht. Ebenso könnte die Polyolefinschicht 3 bei Bedarf eingefärbt werden.

Die Polyolefinschicht 3 könnte dabei auch selbst mehrschichtig aufgebaut sein, z.B. in einer koextrudierten mehrschichtigen Polyolefinfolie als Polyolefinschicht 3. Die mehrschichtige Polyolefinfolie kann dabei im Kern auch andere Materialien als Polyolefin enthalten. Die äußeren Schichten der mehrschichtigen Polyolefinfolie sind dabei allerdings aus Polyolefin.

Auf der der Kleberschicht 4 abgewandten Oberfläche der Trägerschicht 2 kann auch eine farbige oder transparente Lackschicht 6 vorgesehen sein. Mögliche Lacke für die Lackschicht 6 sind einkomponentige Epoxy-Lacksysteme oder einkomponentige Polyester-Lacksysteme. Bevorzugt wird der Lack mit einer Grammatur von 2,5 g/m² (trocken) aufgetragen. Anstatt einer äußeren Lackschicht 6 könnte auch eine Schutzschicht aus Kunststoff, wie Polyester oder Polypropylen (z.B. ungerecktes Polypropylen CPP), aufkaschiert oder aufextrudiert werden.

Um die Haftung zwischen Lackschicht 6 bzw. Schutzschicht und Trägerschicht 2 zu verbessern kann auch vorgesehen sein, die der Lackschicht 6 bzw. der Schutzschicht zugewandte Oberfläche der Aluminium Trägerschicht 2 vor der Lackierung durch eine Silikatisierung oder Titanisierung vorzubehandeln, um auch dort die Hafteigenschaften zum Aluminium zu verbessern.

Sowohl der Kleber für die Kleberschicht 4 und, sofern vorhanden, der Lack für die Lackschicht 6 bzw. der Kunststoff für die Schutzschicht sind bevorzugt sterilisationsbeständig, um aus dem Verpackungslaminat 1 sterilisierbare Verpackungen herstellen zu können. Sterilisationsbeständig bedeutet dabei, dass die erforderliche Verbundhaftung durch den Sterilisationsprozess, typisch Temperaturen um die 130°C bei Zeitspannen um 30min, nicht verloren geht.

Das Verpackungslaminat 1 wird häufig zu Verpackungsschalen tiefgezogen, wobei die Lackschicht 6 bzw. die Schutzschicht aus Kunststoff die Außenseite der Verpackungsschale bildet und die Polyolefinschicht 3 dem Inneren der Verpackungsschale zugewandt ist. Die Polyolefinschicht 3 kann dabei auch die Funktion einer Siegelschicht zum Verschließen der Verpackungsschale, beispielsweise mit einer Verschlussplatine, ausbilden. Zu diesem Zweck kann auch vorgesehen sein, dass vorzugsweise auf der der Kleberschicht 4 abgewandten Oberfläche der Polyolefinschicht 3 eine Ölschicht 7 aufgetragen wird, um den Tiefziehprozess zu ermöglichen. Das Öl wird dabei normalerweise erst kurz vor dem Tiefziehen aufgetragen und verteilt sich prozessbedingt in der Regel auch auf die gegenüberliegende Oberfläche des Verpackungslaminats 1. Das Öl für die Ölschicht 7 besteht häufig aus (medizinischem) Weißöl und/oder Glyzerin Mono Oleat und wird vorzugsweise mit einer Grammatur von ca. 0,2 - 1 g/m², vorzugsweise 0,5 - 0,7 g/m², aufgetragen. Alternativ könnten auch pflanzliche Öle oder gelöste pflanzliche Wachse, wie z.B. Carnaubawachs, zu diesem Zweck verwendet werden.

Mit Fig.2 ist ein beispielhafter Herstellprozess für ein kaschiertes Verpackungslaminat 1 nach Fig.1 dargestellt. Eine Aluminiumfolie (Trägerschicht 2) wird von einer Rolle 20 abgewickelt und einem Lackierwerk 21 (optional) zugeführt, in dem auf eine Oberfläche der Trägerschicht 2 eine Lackschicht 6 aufgetragen wird. Die Lackschicht 6 wird in einem folgenden Trockenkanal 22 getrocknet bzw. auspolymerisiert. Danach wird die gegenüberliegende Oberfläche in einem Oberflächenbehandlungswerk 23 silikatisiert oder titanisiert um die modifizierte Oberflächenschicht 5 auf der Aluminium Trägerschicht 2 auszubilden. Auf die modifizierte Oberflächenschicht 5 wird in einem Kleberauftragswerk 24 der Kleber aufgetragen. Der aufgetragene Kleber wird in einem weiteren Trockenkanal 25 getrocknet. Da Aluminium mit einem Polyolefin verbunden wird, kommt an sich nur die Trockenkaschierung in Frage, da beim Nasskaschieren sich das Lösemittel nicht oder nicht ausreichend schnell verflüchtigen könnte und es zu Bläschenbildung kommen würde. Die derart behandelte Trägerschicht 2 wird dann einem Kaschierwerk 26 zugeführt. Dem Kaschierwerk 26 wird gleichzeitig auch eine Polyolefinfolie (Polyolefinschicht 3) von einer Rolle 27 zugeführt. Die Kaschierung erfolgt im Kaschierwerk 26 zwischen einem Rollenpaar, das die Trägerschicht 2 und die Polyolefinschicht 3 zusammendrückt. Das fertige Verpackungslaminat 1 kann dann auf einer Rolle 28 aufgewickelt und von der Rolle 28 weiterverarbeitet werden. Falls das fertige Verpackungslaminat 1 zu einer Schale, Becher oder ähnlichem tiefgezogen werden soll, kann vor dem Tiefziehen vorgesehen sein, die freie Oberfläche der Polyolefinschicht mit einer Ölschicht 7 zu versehen.

Das Lackierwerk 21 kann natürlich auch entfallen, wenn keine Lackschicht 6 erwünscht ist oder wenn die Aluminiumfolie bereits mit einer Schutzschicht aus Kunststoff vorliegt. Insbesondere die Schutzschicht aus Kunststoff könnte aber auch erst nach dem oder gleichzeitig mit dem, Kaschieren der Polyolefinschicht 3 aufgebracht werden. Dabei könnte auch vorgesehen sein, die Trägerschicht 2 beidseitig zu Silikatisieren oder Titanisieren.

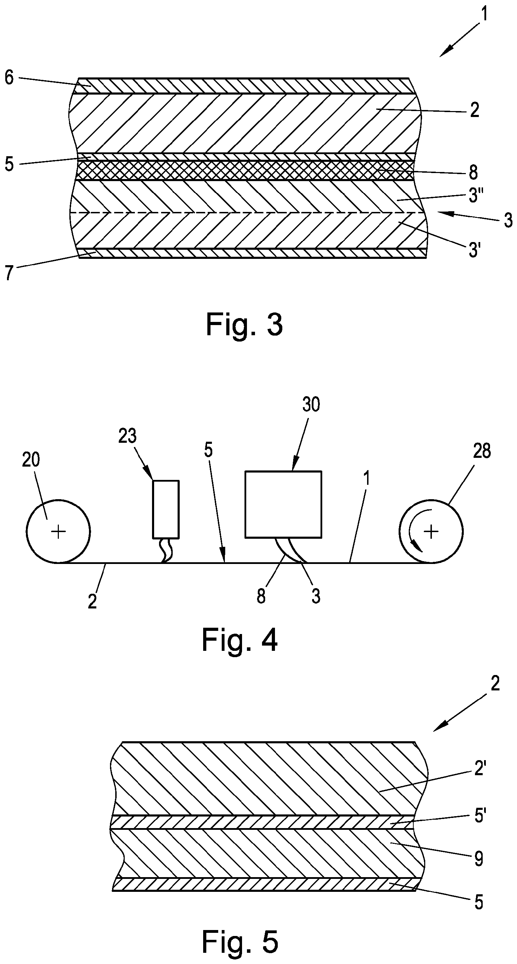

In Fig.3 ist ein erfindungsgemäßes koextrudiertes Verpackungslaminat 1 dargestellt. Hierbei sind mit gleichem Bezugszeichen die gleichen Schichten bezeichnet und es gilt das oben zu Fig.1 gesagte analog.

Der Unterschied beim koextrudierten Verpackungslaminat 1 ist der, dass auf die Aluminium Trägerschicht 2, die wie beschrieben auf der der Polyolefinschicht 3 zugewandten Oberfläche silikatisiert oder titanisiert ist, eine Haftvermittlerschicht 8 und die Polyolefinschicht 3 koextrudiert werden. Das bedeutet, dass die Haftvermittlerschicht 8 und die Polyolefinschicht 3 gleichzeitig in einem Extruder auf die Trägerschicht 2 aufextrudiert werden. Durch die modifizierte Oberfläche 5 der Trägerschicht 2 kann im Verpackungslaminat 1 wieder ausreichend Verbundhaftung zur Trägerschicht 2 aufgebaut werden.

Als Haftvermittlerschicht 8 kommt bevorzugt ein Haftvermittler auf Polyolefinbasis, bevorzugt aus eine modifzierte Polypropylenverbindung, z.B. ein Maleinsäureanhydrid-gepropftes Polypropylen, zur Anwendung.

Ein möglicher Herstellprozess des koextrudierten Verpackungslaminats 1 ist in Fig.4 dargestellt. Hier wird eine Aluminiumfolie auf einer Rolle 20 als Trägerschicht 2 auf einer Oberfläche in einem Oberflächenbehandlungswerk 23 titanisiert oder silikatisiert. Die Aluminiumfolie auf der Rolle könnte auf der gegenüberliegenden Oberfläche bereits lackiert oder mit einer Schutzschicht aus Kunststoff beschichtet sein. Ebenso könnte die Aluminiumfolie vor der Oberflächenbehandlung wie in Fig.3 beschrieben lackiert oder nach einer optionalen Oberflächenbehandlung mit einer Schutzschicht aus Kunststoff beschichtet werden. Auf der Seite mit der modifizierten Oberflächenschicht 5 wird dann in einem Extruder 30 die Haftvermittlerschicht 8 und eine Polyolefinschicht 3 oder mehrere Polyolefinschicht 3', 3" aufextrudiert. Das Verpackungslaminat 1 kann dann wieder auf einer Rolle 28 aufgewickelt und weiteren Fertigungsprozessen zugeführt werden.

Die Schutzschicht könnte ebenso nach dem Kaschieren oder nach dem Aufextrudieren der Polyolefinfolie 3 in einem nachgeschaltetem Arbeitsgang aufgebracht werden.

Vorzusgweise sind die Haftvermittlerschicht 8 und die Polyolefinschicht 3 sterilisationsbeständig, um aus dem Verpackungslaminat 1 sterilisierbare Verpackungen herstellen zu können.

Die Polyolefinschicht 3 des Verpackungslaminats 1 ist vorzugsweise ein Polypropylen (PP) Polymer, z.B. aus der Gruppe der PP-Homopolymere, PP-Randomcopolymere, PP-Blockcopolymere, HMS (hochschmelzfest) PP-Polymere, modifizierten PP-Polymere. Auch Mischungen solcher PP-Polymere kommen in Frage, wobei die Mischung auch Anteile anderer Polyolefine, wie z.B. Polyethylen (PE), Cyclo-Olefin-Copolymere (COC), thermoplastische Polyolefine (TPO), enthalten kann. Die Polyolefinschicht 3 kann ungefüllt sein, kann aber auch übliche Füllstoffe, wie z.B. Talk, Kalziumkarbonat (CaCO₃) und ähnliches, enthalten.

Die Polyolefinschicht 3 könnte sowohl im kaschierten, als auch im koexdrudierten Verpackungslaminat 1 selbst mehrschichtig ausgeführt sein, wie in Fig.3 angedeutet. Es könnte z.B. eine erste Polyolefinschicht 3' mit einer zweiten Polyolefinschicht 3" und mit der Haftvermittlerschicht 8 koextrudiert werden. Damit können die verschiedenen Polyolefinschichten 3', 3" unterschiedliche Eigenschaften aufweisen, je nach Anwendung und Bedarf. Eine erste Polyolefinschicht 3' könnte z.B. eine ungefüllte Polyolefinschicht sein und die zweite Polyolefinschicht 3" eine gefüllt Polyolefinschicht.

Die im Verpackungslaminat 1 äußere Schicht der Polyolefinschicht 3, hier z.B. die erste Polyolefinschicht 3', kann wieder die Funktion einer Siegelschicht verwirklichen. Diese Polyolefinschicht 3' kann daher beispielswiese auch so formuliert sein, dass eine mehr oder weniger feste oder eine für den Konsumenten leicht abziehbare (peelfähige) Siegelung erzielt wird. Das gilt im Wesentlichen auch für die Polyolefinschicht 3 im kaschierten Verpackungslaminat 1.

Beim Koextruideren könnten zusätzliche Funktionalitäten realisiert werden, wie z.B. eine Einfärbung einer Schicht aus optischen Gründen, feuchte- oder sauerstoffabsorbierende Additive, antimikrobiell wirkende Additive, usw.

Weiters kann die äußerste Schicht der Polyolefinschicht 3 auch spezielle Releaseeigenschaften aufweisen, um z.B. eine Anhaftung von Füllgut zu verringern bzw. zu vermeiden, oder um die Entleerung zu verbessern. Dazu kann diese Schicht auch Oberflächenstrukturen, wie z.B. eine Prägung, aufweisen. Das gilt im Wesentlichen auch für die Polyolefinschicht 3 im kaschierten Verpackungslaminat 1.

Für besonders aggressive, wie beispielswiese saure Füllgüter mit niedrigem pH-Wert, oder fette Füllgüter kann die Trägerschicht 2 auch eine zusätzliche Primerschicht 9 zur weiteren Verbesserung der Haftung bzw. der Korrosionsbeständigkeit umfassen, wie in Fig.5 dargestellt. Das gilt sowohl für das kaschierte, als auch für das koextrudierte Verpackungslaminat 1. Dabei würde die Primerschicht 9, beispielsweise als wässriger Polymerlösung in Form einer einkomponentigen, selbsthärtenden Dispersion, auf die silikatisierte oder titanisierte Aluminium Basis-Trägerschicht 2', auf die eine weitere modifizierte Oberflächenschicht 5' vorgesehen ist, aufgetragen werden. Die Primerschicht 9 würde dann zur Ausbildung der modifizierten Oberflächenschicht 5 der Trägerschicht 2 ebenfalls silikatisiert oder titanisiert werden, woraufhin die Trägerschicht 2 mit der Polyolefinschicht 3 verbunden wird.

## Patentansprüche

1. Verpackungslaminat mit einer Trägerschicht (2) aus Aluminium, die über eine Kleberschicht (4) oder Haftvermittlerschicht (8) mit einer Polyolefinschicht (3) verbunden ist, wobei die der Kleberschicht (4) oder Haftvermittlerschicht (8) zugewandte Oberfläche der Trägerschicht (2) eine durch Silikatisierung oder Titanisierung hergestellte modifizierte Oberflächenschicht (5) aufweist.

2. Verpackungslaminat nach Anspruch 1, **dadurch gekennzeichnet, dass** die Polyolefinschicht (3) mehrschichtig aufgebaut ist.

3. Verpackungslaminat nach Anspruch 1, **dadurch gekennzeichnet, dass** auf der der Polyolefinschicht (3) abgewandten Oberfläche der Trägerschicht (2) eine Lackschicht (6) oder Schutzschicht aus Kunststoff vorgesehen ist.

4. Verpackungslaminat nach Anspruch 3, **dadurch gekennzeichnet, dass** die der Lackschicht (6) oder Schutzschicht zugewandte Oberfläche der Trägerschicht (2) eine durch Silikatisierung oder Titanisierung hergestellte modifizierte Oberflächenschicht aufweist.

5. Verpackungslaminat nach einem der Ansprüche 1 bis 4, **dadurch gekennzeichnet, dass** die der Trägerschicht (2) zugewandte Oberfläche der Polyolefinschicht (3) corona- oder flammvorbehandelt oder silikatisiert oder titanisiert ist.

6. Verpackungslaminat nach einem der Ansprüche 1 bis 5, **dadurch gekennzeichnet, dass** der Kleber für die Kleberschicht (4) ein Polyurethan Kleber, ein acrylatbasierter Kleber oder ein polyesterbasierter Kleber ist.

7. Verpackungslaminat nach einem der Ansprüche 1 bis 5, **dadurch gekennzeichnet, dass** ein Haftvermittler auf Polyolefinbasis für die Haftvermittlerschicht (8) vorgesehen ist.

8. Verpackungslaminat nach einem der Ansprüche 1 bis 7, **dadurch gekennzeichnet, dass** die Trägerschicht (2) eine Trägerschicht (2') aus Aluminium und eine Primerschicht (9) umfasst, wobei zwischen Trägerschicht (2') und Primerschicht (9) eine weitere durch Silikatisierung oder Titanisierung hergestellte modifizierte Oberflächenschicht (5') vorgesehen ist.

9. Verfahren zur Herstellung eines Verpackungslaminats (1) in Form einer Trägerschicht (2) aus Aluminium, die über eine Kleberschicht (4) mit einer Polyolefinschicht (3) verbunden ist, **dadurch gekennzeichnet, dass** eine Aluminiumfolie als Trägerschicht (2) auf einer Oberfläche zur Ausbildung einer modifizierten Oberflächenschicht (5) titanisiert oder silikatisiert wird, auf die silikatisierte oder titanisierte Oberfläche ein Kleber aufgebracht wird und auf die Kleberschicht (4) eine Polyolefinfolie aufkaschiert wird.

10. Verfahren zur Herstellung eines Verpackungslaminats (1) in Form einer Trägerschicht (2) aus Aluminium, die über eine Haftvermittlerschicht (8) mit einer Polyolefinschicht (3) verbunden ist, **dadurch gekennzeichnet, dass** eine Aluminiumfolie auf einer Oberfläche zur Ausbildung einer modifizierten Oberflächenschicht (5) titanisiert oder silikatisiert wird und auf die silikatisierte oder titanisierte Oberfläche ein Haftvermittler und eine Polyolefinfolie koextrudiert werden.

11. Verfahren nach Anspruch 9 oder 10, **dadurch gekennzeichnet, dass** auf die der Polyolefinschicht (3) abgewandten Oberfläche der Trägerschicht (2) eine Lackschicht (6) oder eine Schutzschicht aus Kunststoff aufgebracht wird.

12. Verfahren nach Anspruch 11, **dadurch gekennzeichnet, dass** die der Lackschicht (6) oder der Schutzschicht zugewandte Oberfläche der Trägerschicht (2) titanisiert oder silikatisiert wird.

13. Verfahren nach einem der Ansprüche 9 bis 12, **dadurch gekennzeichnet, dass** auf die titanisierte oder silikatisierte Oberfläche der Aluminiumfolie eine Primerschicht (9) aufgetragen wird, die titanisiert oder silikatisiert wird und danach mit der Polyolefinschicht (3) verbunden wird.

14. Verpackungsschale hergestellt durch Tiefziehen eines Verpackungslaminats (1) nach einem der Ansprüche 1 bis 8.

15. Verpackungsschale nach Anspruch 14, **dadurch gekennzeichnet, dass** auf zumindest einer Oberfläche des Verpackungslaminats (1) ein Öl zur Ausbildung einer Ölschicht (7) aufgebracht wird.

## Claims

1. Packaging laminate comprising a support layer (2) made of aluminum, which is bonded to a polyolefin layer (3) via an adhesive layer (4) or adhesion promoter layer (8), wherein the surface of the support layer (2) facing the adhesive layer (4) or adhesion promoter layer (8) comprises a modified surface layer (5) produced by silicatization or titanization.

2. Packaging laminate according to claim 1, **characterized in that** the polyolefin layer (3) is multi-layered.

3. Packaging laminate according to claim 1, **characterized in that** a coating layer (6) or a protective layer made of plastics material is provided on the surface of the support layer (2) facing away from the polyolefin layer (3).

4. Packaging laminate according to claim 3, **characterized in that** the surface of the support layer (2) facing the coating layer (6) or protective layer comprises a modified surface layer produced by silicatization or titanization.

5. Packaging laminate according to any of claims 1 to 4, **characterized in that** the surface of the polyolefin layer (3) facing the support layer (2) is corona or flame pre-treated or silicatized or titanized.

6. Packaging laminate according to any of claims 1 to 5, **characterized in that** the adhesive for the adhesive layer (4) is a polyurethane adhesive, an acrylate-based adhesive or a polyester-based adhesive.

7. Packaging laminate according to any of claims 1 to 5, **characterized in that** an adhesion promoter based on polyolefin is provided for the adhesion promoter layer (8).

8. Packaging laminate according to any of claims 1 to 7, **characterized in that** the support layer (2) comprises a support layer (2') made of aluminum and a primer layer (9), whereas a further modified surface layer (5'), produced by silicatization or titanization, being provided between the support layer (2') and the primer layer (9).

9. Method for producing a packaging laminate (1) in the form of a support layer (2) made of aluminum, which support layer is bonded to a polyolefin layer (3) via an adhesive layer (4), **characterized in that** an aluminum film as the support layer (2) is titanized or silicatized on a surface in order to form a modified surface layer (5), an adhesive is applied to the silicatized or titanized surface, and a polyolefin film is laminated onto the adhesive layer (4).

10. Method for producing a packaging laminate (1) in the form of a support layer (2) made of aluminum, which support layer is bonded to a polyolefin layer (3) via a adhesion promoter layer (8), **characterized in that** an aluminum film is titanized or silicatized on a surface in order to form a modified surface layer (5) and a adhesion promoter and a polyolefin film are co-extruded onto the silicatized or titanized surface.

11. Method according to either claim 9 or claim 10, **characterized in that** a coating layer (6) or a protective layer made of plastics material is applied to the surface of the support layer (2) facing away from the polyolefin layer (3).

12. Method according to claim 11, **characterized in that** the surface of the support layer (2) facing the coating layer (6) or the protective layer is titanized or silicatized.

13. Method according to any of claims 9 to 12, **characterized in that** a primer layer (9) is applied to the titanized or silicatized surface layer of the aluminum film, which primer layer is titanized or silicatized and subsequently bonded to the polyolefin layer (3).

14. Packaging tray produced by deep-drawing a packaging laminate (1) according to any of claims 1 to 8.

15. Packaging tray according to claim 14, **characterized in that** an oil for forming an oil layer (7) is applied to at least one surface of the packaging laminate (1).

## Revendications

1. Stratifié d'emballage avec une couche de support (2) en aluminium, laquelle est reliée à une couche de polyoléfine (3) par l'intermédiaire d'une couche adhésive (4) ou d'une couche de promoteur d'adhérence (8), dans lequel la surface de la couche de support (2) faisant face à la couche adhésive (4) ou la couche de promoteur d'adhérence (8) présente une couche de surface modifiée (5) produite par silicatisation ou par titanisation.

2. Stratifié d'emballage selon la revendication 1, **caractérisé en ce que** la couche de polyoléfine (3) présente une structure multicouche.

3. Stratifié d'emballage selon la revendication 1, **caractérisé en ce qu**'une couche de laque (6) ou une couche de protection en plastique est prévue sur la surface de la couche de support (2) faisant face à la couche de polyoléfine (3).

4. Stratifié d'emballage selon la revendication 3, **caractérisé en ce que** la surface de la couche de support (2) faisant face à la couche de laque (6) ou la couche de protection présente une couche de surface modifiée produite par silicatisation ou par titanisation.

5. Stratifié d'emballage selon l'une des revendications 1 à 4, **caractérisé en ce que** la surface de la couche de polyoléfine (3) faisant face à la couche de support (2) est prétraitée par corona ou par flamme, ou silicatée ou titanisée.

6. Stratifié d'emballage selon l'une des revendications 1 à 5, **caractérisé en ce que** l'adhésif de la couche adhésive (4) est un adhésif polyuréthane, un adhésif à base d'acrylate ou un adhésif à base de polyester.

7. Stratifié d'emballage selon l'une des revendications 1 à 5, **caractérisé en ce qu**'un promoteur d'adhérence à base de polyoléfine est prévu pour la couche de promoteur d'adhérence (8).

8. Stratifié d'emballage selon l'une quelconque des revendications 1 à 7, **caractérisé en ce que** la couche de support (2) comprend une couche de support (2') en aluminium et une couche d'apprêt (9), dans lequel une couche de surface modifiée supplémentaire (5') produite par silicatisation ou par titanisation est prévue entre la couche de support (2') et la couche d'apprêt (9).

9. Procédé de fabrication d'un stratifié d'emballage (1) sous la forme d'une couche de support (2) en aluminium, laquelle est reliée à une couche polyoléfine (3) par l'intermédiaire d'une couche adhésive (4), **caractérisé en ce qu**'un film d'aluminium est titanisé ou silicaté comme couche de support (2) sur une surface de façon à former une couche de surface modifiée (5), en ce qu'un adhésif est appliqué sur la surface silicatée ou titanisée, et en ce qu'un film de polyoléfine est stratifié sur la couche adhésive (4).

10. Procédé de fabrication d'un stratifié d'emballage (1) sous la forme d'une couche de support (2) en aluminium, laquelle est reliée à une couche de polyoléfine (3) par l'intermédiaire d'une couche de promoteur d'adhérence (8), **caractérisé en ce qu**'un film d'aluminium est titanisé ou silicaté sur une surface de façon à former une couche de surface modifiée (5), et en ce qu'un promoteur d'adhérence et un film de polyoléfine sont co-extrudés sur la surface silicatée ou titanisée.

11. Procédé selon la revendication 9 ou 10, **caractérisé en ce qu**'une couche de laque (6) ou une couche de protection en plastique est appliquée sur la surface de la couche de support (2) faisant face à la couche de polyoléfine (3).

12. Procédé selon la revendication 11, **caractérisé en ce que** la surface de la couche de support (2) faisant face à la couche de laque (6) ou la couche de protection est titanisée ou silicatée.

13. Procédé selon l'une des revendications 9 à 12, **caractérisé en ce qu**'une couche d'apprêt (9) est appliquée sur la surface titanisée ou silicatée du film d'aluminium, laquelle couche d'apprêt est titanisée ou silicatée puis reliée à la couche de polyoléfine (3).

14. Barquette d'emballage réalisée par emboutissage profond d'un stratifié d'emballage (1) selon l'une des revendications 1 à 8.

15. Barquette d'emballage selon la revendication 14, **caractérisé en ce qu'**une huile est appliquée sur au moins une surface du stratifié d'emballage (1) pour former une couche d'huile (7).
